# EUROPEAN PATENT SPECIFICATION

(11) **EP 0 369 773 B1**
(45) Date of publication and mention of the grant of the patent: **26.10.1994**
(21) Application number: 89311832.3
(22) Date of filing: 15.11.1989
(51) Int. Cl.: G06F 5/06, G06F 13/18

(54) **Queue buffer memory control system**
Warteschlangenpufferspeichersteuerungssystem
Système de commande pour mémoire tampon de file

(30) Priority: 16.11.1988 JP 289222/88
(43) Date of publication of application: 23.05.1990
(73) Proprietor: FUJITSU LIMITED, Kawasaki-shi, Kanagawa 211 (JP)
(72) Inventor: Aoki, Naozumi, Kawasaki-shi Kanagawa 213 (JP)
(74) Representative: Stebbing, Timothy Charles

(56) References cited:
- US-A- 3 596 252
- US-A- 4 649 512

## Description

The present invention relates to a queue buffer memory control system, more particularly, it relates to management of a busy state (busy management) of the queue buffer memory provided between a main storage unit and an external storage unit in a data processing system.

In a data processing system constituted by central processing units (CPU), main storage units (MSU), channel processors, and an external storage unit (SSU), a queue buffer memory is usually provided between the main storage unit and the external storage unit. In this case, only one external storage unit is provided in the multiprocessor system which is constituted by a plurality of clusters, each having central processing units, main storage units and channel processors.

When data is read out from the main storage unit and the data is also written into the external storage unit, the data is temporarily stored in the queue buffer memory and the data stored in the queue buffer memory is also written into the external storage unit. Accordingly, the queue buffer memory has a buffer function to solve an unbalanced state in which the read/write speed of the external storage unit is slower than that of the main storage unit so that these units operate asynchronously with each other.

In this case, there is a limit to the capacity of the queue buffer memory. Accordingly, it is necessary to effectively manage the busy state of queue buffer memory so that it is possible to raise the data transfer speed between the main storage unit and the external storage unit.

It is therefore desirable to provide queue buffer memory control system enabling effective management of the busy state of the queue buffer memory.

In accordance with the present invention, there is provided a queue buffer memory control system for managing the busy state of data at a queue buffer memory provided between a main storage unit and an external storage unit, including: a control unit for receiving a request signal from a central processing unit, selecting priority order of the request signal and decoding a destination command included in the request signal as to whether or not the request signal indicates an access to said queue buffer memory; an output data detection unit operatively connected to the queue buffer memory for detecting data quantity output from the queue buffer memory and outputting a detection signal at every detection of the data; an input data detection unit operatively connected to an output side of the control unit for detecting existence of data to be transferred to the queue buffer memory based on the destination command of the request signal, and outputting a detection signal when the input data detection unit detects the request signal before the main storage unit receives the request signal; and a data read/stop indication unit operatively connected to the input data detection unit and the output data detection unit for detecting the data quantity to be transferred to the queue buffer memory based on the difference between the detection signals, and generating a stop signal to send to the control unit for stopping input of the request signal having the destination command of the data transfer from the main storage unit to the queue buffer memory when the data quantity at the queue buffer memory has reached a predetermined maximum quantity.

Reference is made, by way of example, to the accompanying drawings in which:-
Fig. 1 is a schematic block of a queue buffer memory control system of an existing type;
Fig. 2 is a basic block diagram of queue buffer memory control system according to the present invention;
Fig. 3 is a schematic block diagram of a queue buffer memory control system according to an embodiment of the present invention; and
Fig. 4 is a detailed circuit diagram of the queue buffer memory control system shown in Fig. 3.

Before describing the preferred embodiments, an explanation will be given of problems of the present technology.

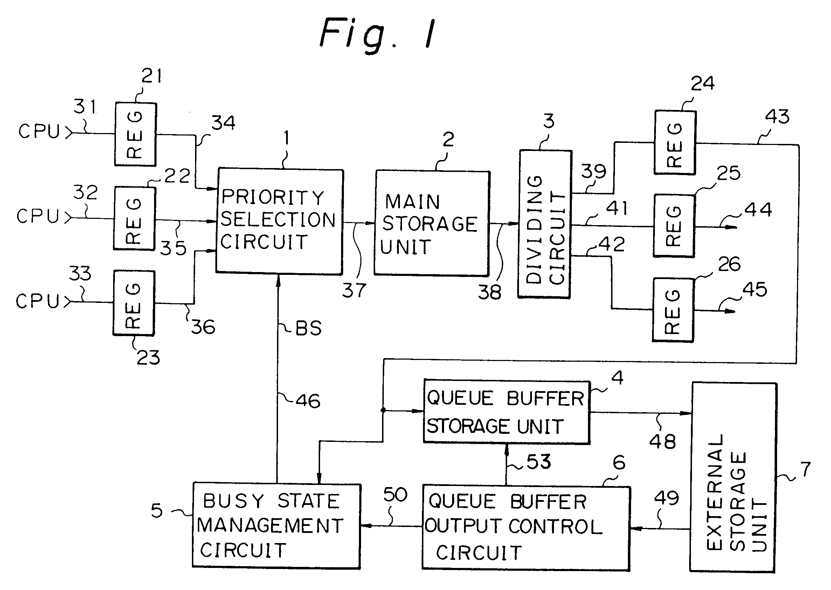

Fig. 1 is a schematic block diagram of a queue buffer memory control system of an existing type.

In Fig. 1, reference number 1 denotes a priority selection circuit, 2 a main memory, 3 a divider, 4 a queue buffer, 5 a busy state management circuit, 6 a queue buffer output control circuit, and 7 an external memory. Further, 21 to 26 denote registers, and 34 to 50 and 53 denote signal lines.

For example, when data is sequentially read out from the main memory 2 and written into the queue buffer 4, the data quantity exceeds the capacity of the queue buffer 4 if a write enabling signal is not generated from the external memory 7 to the queue buffer 4 and the queue buffer memory 4 cannot transfer the data to the external storage unit. Accordingly, it is necessary to provide the busy state management circuit 5 for controlling the data transfer between the main memory and the queue buffer.

The busy state management circuit 5 has the function of detecting the data quantity just stored in the queue buffer 4 based on the difference between the data quantity input from the main memory 2 to the queue buffer 4 and the data quantity output from the queue buffer 4 to the external memory 7. Further, the busy management circuit 5 has the function of outputting a busy signal for stopping a write request for writing the data into the queue buffer 4 when the data quantity at the queue buffer 4 reaches a predetermined limit of the capacity of the queue buffer memory. In this case, the limit of the capacity is determined by taking account of the data existing on the line between the main memory 2 and the queue buffer 4.

In general, several τ (τ: clock pulse period) are necessary as the transfer time from the reading out of the data at the main memory 2 until the writing of that data at the queue buffer 4. Assuming that the queue buffer 4 can store thirty-two blocks of data as the maximum capacity and that the transfer time is 20 τ, for example, in the state that the queue buffer 4 is completely filled by thirty two blocks of data, when the busy state management circuit 5 outputs the busy signal to stop the reading out of the data from the main memory 2, the data on the bus line between the main memory and the queue buffer (i.e., the data corresponding to the transfer time) are also written into the queue buffer 4.

Accordingly, as a countermeasure to the above problem, the busy state management circuit 5 outputs the busy signal at the timing when the data quantity reaches 12 data blocks (32 minus 20) as the predetermined limit of the capacity at the queue buffer 4. That is, the busy signal must be output at that timing by taking into account data existing on the line.

Therefore, there are problems in that a large useless capacity (area) occurs in the queue buffer 4 taking into account the data existing on the line. In this case, the busy signal must be frequently generated from the busy state management circuit 5 to effectively manage the state of the queue buffer 4 when the data quantity reaches the predetermined limit in spite of the existence of data on the line. Accordingly, these problems result in deterioration of the performance of the system.

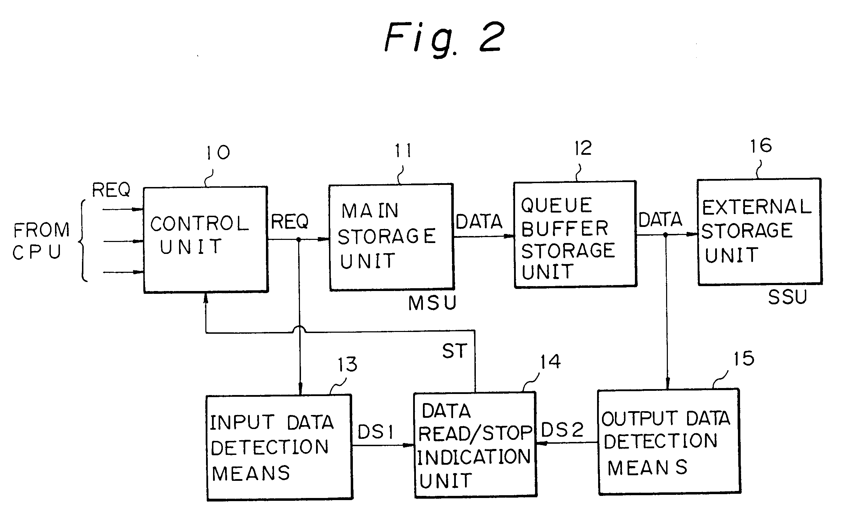

Figure 2 is a basic block diagram of a queue buffer memory control system embodying the present invention.

In Fig. 2, reference number 10 denotes a control unit, 11 a main storage unit, 12 a queue buffer memory, 13 an input data detection unit, 14 a data read/stop indication unit, 15 an output data detection unit, and 16 an external storage unit.

The control unit 10 receives a request signal REQ from a central processing unit CPU and selects a priority order. The queue buffer memory 12 stores the data DATA read out from the main storage unit 11 which outputs the data after receiving a request signal REQ from the control unit 10. The output data detection unit 15 outputs a detection signal DS2 for each data output from the queue buffer memory 12. The input data detection unit 13 detects the request signal REQ before this signal REQ is input to the main storage unit 11 and outputs a detection signal DS1 indicating the data to be input to the main storage unit 11 at every detection of the request signal REQ.

The detection signals DS1 and DS2 are input to the data read/stop indication unit 14. The data read/stop indication unit 14 detects the data quantity to be stored in the queue buffer memory 12. The data read/stop indication unit 14 outputs a stop signal ST to the control unit 10 to stop the request signal REQ when the data quantity reaches the maximum quantity possible to store in the queue buffer memory 12. Accordingly, using the present invention, the data to be input to the queue buffer memory 12 can be detected in the previous stage read out from the main storage unit 11. Therefore, it is not necessary to take into account the data existing on the line between the main storage unit 11 and the queue buffer memory 12 and it is possible to effectively utilize the capacity of the queue buffer memory until reading a maximum state.

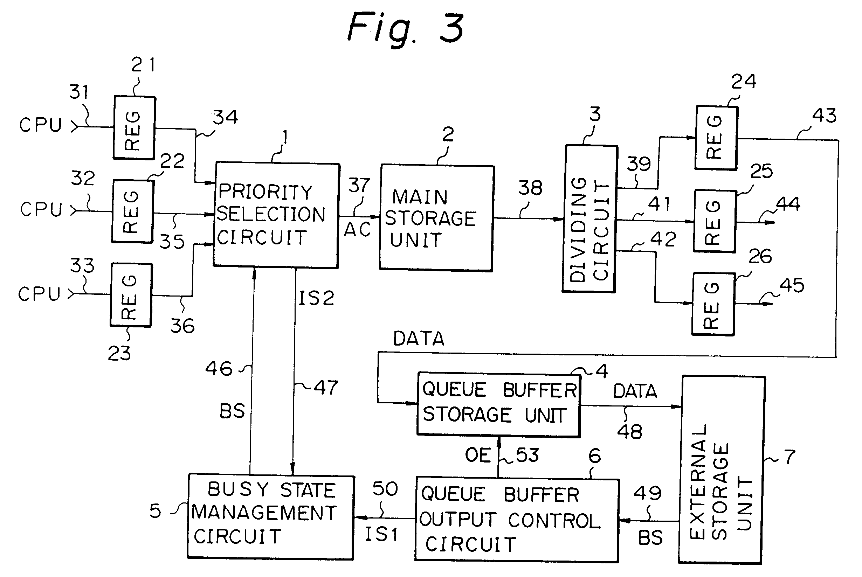

Figure 3 is a schematic block diagram of a queue buffer memory control system according to an embodiment of the present invention. In Fig. 3, reference number 1 denotes a priority selection circuit, 2 a main memory, 3 a dividing circuit, 4 a queue buffer, 5 a busy management circuit, 6 a queue buffer output control circuit, 21 to 26 registers, and 31 to 50 and 53 signal lines. In this embodiment, it is assumed that queue buffer 4 can store thirty two blocks of data as the maximum capacity.

The request signals REQ from the CPU's are transferred to the corresponding registers 21 to 23 through the signal lines 31 to 33. The priority selection circuit 1 selects the priority order of the request signal REQ output from each register through the signal lines 34 to 36. The priority selection circuit 1 outputs an access signal AC to the main memory 2 after determination of the priority order of the request signal REQ. The data stored in the main memory 2 is read out therefrom based on the access signal AC and transferred to the dividing circuit 3.

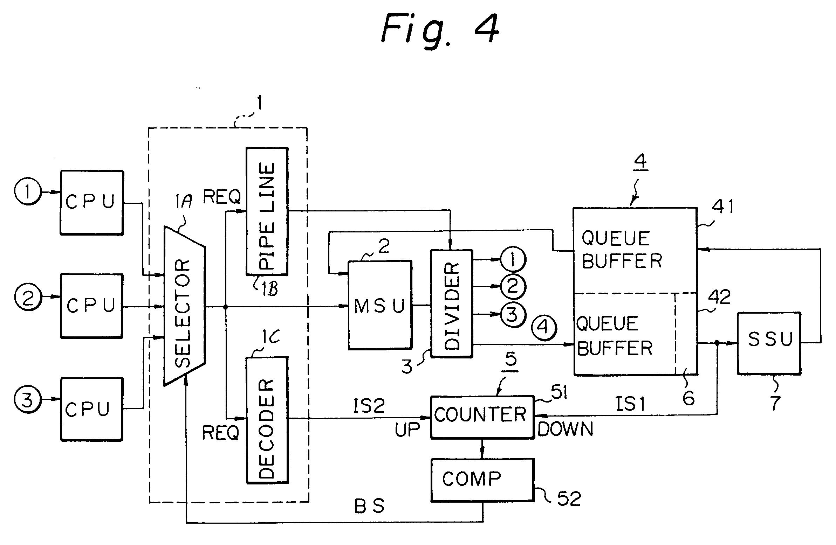

In the dividing circuit 3, the data is distributed to a corresponding register 24 to 26 in accordance with the kind of request, i.e., read request, write request and the like as shown in detail in Fig. 4. This is because the request signal includes a destination command indicating the destination of the data transfer. In case of the write request to the queue buffer 4 as the request made, the data is written into the queue buffer 4 through the register 24 and the signal line 43. Further, this data is also written into the external storage unit 7 through the signal line 48 under the predetermined conditions of the external storage unit 7.

That is, the queue buffer output control circuit 6 outputs an output enable signal OE to the queue buffer 4 through the signal line 53 and the data stored in the queue buffer 4 is output to the external storage unit 7 through the signal line 48 if a busy signal BS is not output from the external storage unit 7 through the signal line 49.

Further, the queue buffer output control circuit 6 outputs an information signal IS1 to the busy management circuit 5 to inform the fact that the data is output from the queue buffer 4 to the external storage unit 7. The information signal IS1 is output from the queue buffer output control circuit 6 every time the above operation is carried out.

The priority selection circuit 1 decodes each request signal REQ input from each register 21 to 23, and detects whether or not information indicating the data transfer from the main memory to the queue buffer 4 is included in the request signal REQ based on the destination command included therein. Further, the priority selection circuit 1 outputs an information signal IS2 to the busy management circuit 5. The information signal IS2 is output from the priority selection circuit 1 to the busy management circuit 5 at every detection of the destination command.

Accordingly, the information signals IS1 and IS2 are input to the busy management circuit 5. As explained above, the former is output from the queue buffer output control circuit 6 and the latter is output from the priority selection circuit 1. The busy management circuit 5 can detect the data quantity stored in the queue buffer 4 based on the difference between the information signals IS1 and IS2. Therefore, the busy management circuit 5 can output the busy signal BS to the priority selection circuit 1 when the data quantity reaches thirty two blocks of data in the queue buffer 4 based on the above calculation. When the priority selection circuit 1 receives the busy signal BS, the priority selection circuit 1 temporarily stops the request signal REQ to prevent writing data into the queue buffer 4 as shown in detail in Fig. 4.

Figure 4 is a detailed circuit diagram of the circuit shown in Fig. 3. As shown in this drawing, the priority selection circuit 1 comprises a priority selector 1A, a pipe-line unit 1B and a decoder 1C. The queue buffer 4 is preferably divided into two blocks 41 and 42 for discriminating whether the area in question is associated with a read operation or a write operation. In this case, the queue buffer output control circuit 6 in Fig. 3 is included in the block 42. The busy state management circuit 5 is mainly constituted by a counter 51 and a comparator 52.

The decoder 1C decodes the destination command included in each request signal REQ as to whether or not the destination command indicates the request of the data to be written into the external memory 7 through the main memory 2 and the queue buffer 42. The decoder 1C outputs the information signal IS2 to the counter 51 when the decoder 1C decodes such a request signal. As explained in Fig. 3, the information signal IS1 is output from the queue buffer output control circuit 6 and input to the counter 51 to count it down. The comparator 52 compares the information signal IS1 with the information signal IS2 based on the count value. Further, the comparator outputs a busy signal BS to the priority selector 1A when the count value exceeds the predetermined limit of the capacity of the queue buffer memory 4.

The pipe-line 1B is provided as a shift register for delaying the request signal. This delay is performed to coincide the transfer speed of the request signal with the read-out speed of the data from the main memory 2. Accordingly, the input timing of the request signal to the divider 3 is coincided with that of the read-out data to the divider 3. The divider 3 is provided for dividing the request signal in accordance with the destination command included in each request signal as explained above. When the request indicates an access of the queue buffer 42, the data is transferred from the main memory 2 to the queue buffer 42 through the signal line ④. Other destinations ① to ③ are returned to, for example, the CPU.

The external storage unit (SSU) 7 is provided for cluster management in the multiprocessor system. One external storage unit is connected in parallel to a plurality of clusters. However, the structure of the multiprocessor system is omitted to simplify the explanation of the present invention.

## Claims

1. A queue buffer memory control system for managing a busy state of data in a queue buffer memory provided between a main storage unit and an external storage unit, comprising:
a control means (10) for receiving a request signal (REQ) from a central processing unit (CPU), selecting a priority order of said request signal and decoding a destination command included in said request signal to determine whether or not said request signal indicates an access to said queue buffer memory;
an output data detection means (15) operatively connected to said queue buffer memory (12) for detecting a data quantity output from said queue buffer memory and outputting a detection signal (DS2) at every detection of said data;
an input data detection means (13) operatively connected to an output side of said control means for detecting existence of data to be transferred to said queue buffer memory based on said destination command of said request signal, and outputting a detection signal (DS1) when said input data detection means detects said request signal before said main storage unit (11) receives said request signal; and
a data read/ stop indication means (14) operatively connected to said input data detection means and said output data detection means for detecting the data quantity to be transferred to said queue buffer memory based on the difference between said detection signals (DS1, DS2), and outputting a stop signal (ST) to said control means for stopping an input of said request signal having said destination command of the data transfer from said main storage unit to said queue buffer memory when the data quantity at said queue buffer memory reaches a predetermined maximum quantity.

2. A queue buffer memory control system as claimed in claim 1, wherein said control means comprises a priority selection circuit (1) having a priority selector (1A) for selecting a priority order of said request signal, a pipe-line unit (1B) for delaying transfer of said request signal, and a decoder (1C) for decoding said destination command included in said request signal.

3. A queue buffer memory control system as claimed in claim 2, wherein said data read/stop indication means (14) comprises a counter circuit (51) for counting said detection signals, and a comparator (52) for comparing a count value of said detection signal with that of the other detection signal and outputting said stop signal to said priority selector (1A) when said counting value reaches a predetermined limit of the data capacity at said queue buffer memory.

## Patentansprüche

1. Steuersystem für einen Warteschlangen-Pufferspeicher zum Verwalten eines Besetztzustandes von Daten in einem Warteschlangen-Pufferspeicher, der zwischen einer Haupspeichereinheit und einer externen Speichereinheit vorgesehen ist, umfassend
ein Steuermittel (10) zum Empfangen eines Anforderungssignals (REQ) von einer zentralen Verarbeitungseinheit (CPU), Auswählen einer Prioritätsordnung des Anforderungssignals und Decodieren eines in dem Anforderungssignal enthaltenen Zielbefehls, um festzustellen, ob das Anforderungssignal einen Zugriff auf den Warteschlangen-Pufferspeicher anzeigt oder nicht,
ein Ausgabedaten-Nachweismittel (15) in Wirkverbindung mit dem Warteschlangen-Pufferspeicher (12) zum Nachweisen einer von dem Warteschlangen-Pufferspeicher ausgegebenen Datenmenge und zum Ausgeben eines Nachweissignals (DS2) bei jedem Nachweis dieser Daten,
ein Eingabedaten-Nachweismittel (13) in Wirkverbindung mit einer Ausgangsseite des Steuermittels zum Nachweisen eines Vorhandenseins von an den Warteschlangen-Pufferspeicher zu übertragenden Daten auf der Grundlage des Zielbefehls des Anforderungssignals und zum Ausgeben eines Nachweissignals (DS1), wenn das Eingabedaten-Nachweismittel das Anforderungssignal nachweist, bevor die Hauptspeichereinheit (11) das Anforderungssignal erhält, und
ein Mittel (14) zur Datenlese-/Datenstoppanzeige in Wirkverbindung mit dem Eingabedaten-Nachweismittel und dem Ausgabedaten-Nachweismittel zum Nachweisen der zum Warteschlangen-Pufferspeicher zu übertragenden Datenmenge auf der Grundlage der Differenz zwischen den Nachweissignalen (DS1, DS2) und zum Ausgeben eines Stoppsignals (ST) an das Steuermittel zum Stoppen einer Eingabe des Anforderungssignals, das den Zielbefehls der Datenübertragung von der Hauptspeichereinheit an den Warteschlangen-Pufferspeicher enthält, wenn die Datenmenge an dem Warteschlangen-Pufferspeicher eine vorbestimmte maximale Menge erreicht.

2. Steuersystem für einen Warteschlangen-Pufferspeicher nach Anspruch 1, bei dem das Steuermittel eine Prioritätsauswahlschaltung (1) umfaßt, die einen Prioritätswähler (1A) zum Auswählen einer Prioritätsordnung des Anforderungssignals, eine Pipeline-Einheit (1B) zum Verzögern der Übertragung des Anforderungssignals und einen Decodierer (1C) zum Decodieren des in dem Anforderungssignal enthaltenen Zielbefehls aufweist.

3. Steuersystem für einen Warteschlangen-Pufferspeicher nach Anspruch 2, bei dem das Mittel (14) zur Datenlese-/Datenstoppanzeige umfaßt: eine Zählerschaltung (51) zum Zählen der Nachweissignale und einen Komparator (52) zum Vergleichen eines Zählwerts des Nachweissignals mit dem des anderen Nachweissignals und zum Ausgeben des Stoppsignals an den Prioritätswähler (1A), wenn der Zählwert eine vorbestimmte Grenze der Datenkapazität des Warteschlangen-Pufferspeichers erreicht.

## Revendications

1. Système de contrôle de mémoire tampon de file d'attente pour gérer un état occupé par des données dans une mémoire tampon de file d'attente prévue entre une unité de mémoire centrale et une unité de mémoire externe, comprenant :
un moyen de contrôle (10) pour recevoir un signal de demande (REQ) d'une unité centrale de traitement (CPU), pour sélectionner un ordre de priorité dudit signal de demande et décoder une commande de destination incluse dans ledit signal de demande afin de déterminer si ledit signal de demande indique ou non un accès à ladite mémoire tampon de file d'attente ;
un moyen de détection de données de sortie (15) connecté activement à ladite mémoire tampon de file d'attente (12) pour détecter une quantité de données en sortie de ladite mémoire tampon de file d'attente et sortir un signal de détection (DS2) à chaque détection desdites données ;
un moyen de détection de données d'entrée (13) connecté activement à un côté de sortie dudit moyen de contrôle pour détecter l'existence de données à transférer jusqu'à ladite mémoire tampon de file d'attente selon ladite commande de destination dudit signal de demande, et sortir un signal de détection (DS1) quand ledit moyen de détection de données d'entrée détecte ledit signal de demande avant que ladite unité de mémoire centrale (11) reçoive ledit signal de demande ; et,
un moyen d'indication de lecture/d'arrêt de données (14) connecté activement audit moyen de détection de données d'entrée et audit moyen de détection de données de sortie pour détecter la quantité de données à transférer jusqu'à ladite mémoire tampon de file d'attente selon la différence entre lesdits signaux de détection (DS1, DS2), et sortir un signal d'arrêt (ST) vers ledit moyen de contrôle afin d'arrêter l'entrée dudit signal de demande comportant ladite commande de destination du transfert de données de ladite unité de mémoire centrale à ladite mémoire tampon de file d'attente quand la quantité de données dans ladite mémoire tampon de file d'attente atteint une quantité maximale prédéterminée.

2. Système de contrôle de mémoire tampon de file d'attente selon la revendication 1, dans lequel ledit moyen de contrôle comprend un circuit sélecteur de priorité (1) comportant un sélecteur de priorité (1A) pour sélectionner un ordre de priorité dudit signal de demande, une unité pipeline (1B) pour retarder le transfert dudit signal de demande, et un décodeur (1C) pour décoder ladite commande de destination incluse dans ledit signal de demande.

3. Système de contrôle de mémoire tampon de file d'attente selon la revendication 2, dans lequel ledit moyen d'indication de lecture/d'arrêt de données (14) comprend un circuit compteur (51) pour compter lesdits signaux de détection, et un comparateur (52) pour comparer une valeur de comptage dudit signal de détection à celle de l'autre signal de détection et sortir ledit signal d'arrêt vers ledit sélecteur de priorité (1A) quand ladite valeur de comptage atteint une limite prédéterminée de la capacité de données de ladite mémoire tampon de file d'attente.
